# EUROPEAN PATENT APPLICATION

(11) **EP 1 832 819 A1**
(43) Date of publication of application: **12.09.2007**
(21) Application number: 05766131.6
(22) Date of filing: 19.07.2005
(51) Int. Cl.: F25B 1/00, B60H 1/32, F25B 41/04

(54) **REFRIGERATING CYCLE**

(30) Priority: 26.11.2004 JP 2004341578
(71) Applicant: Valeo Thermal Systems Japan Corporation, Konan-machi, Osato-gun Saitama 3600193 (JP)
(72) Inventor: IIJIMA, Kenji, VALEO THERMAL SYSTEMS JAPAN CORP., Osato-gun Saitama 3600193 (JP)
(74) Representative: Léveillé, Christophe
(86) International application number: PCT/JP2005/013229
(87) International publication number: WO 2006/057093

(57) **Abstract**

In order to assure structural simplicity in an expansion valve, lower manufacturing costs and better operating efficiency in a refrigerating cycle, the present invention provides a refrigerating cycle that uses carbon dioxide as a refrigerant and includes an adjustment means for increasing a valve opening degree indicating an extent to which an expansion valve is opened as a high-pressure side refrigerant pressure measured on an intake side of the expansion valve increases and for decreasing the valve opening degree of the expansion valve as the high-pressure side refrigerant pressure becomes lower. The refrigerating cycle is **characterized in that** the adjustment means sets the valve opening degree of the expansion valve to a position equivalent to a piping inner diameter of 0.2 - 0.5 mm when the high-pressure side refrigerant pressure is 7.38 MPa and sets the valve opening degree of the expansion valve to a position equivalent to a piping inner diameter of 0.8 - 1.6 mm when the high-pressure side refrigerant pressure is 14 MPa.

## Description

### Technical Field

The present invention relates to a refrigerating cycle used in, for instance, an automotive air-conditioning system or the like, and more specifically, it relates to a control mechanism that may be adopted to control an expansion valve.

### Background Art

Carbon dioxide is used as a refrigerant in some refrigerating cycles constituting part of air-conditioning systems or the like. An expansion valve in such a refrigerating cycle may be controlled by adopting either of the following conventional methods. In one method, the temperature of the refrigerant present at the outlet of a radiator (gas cooler) is detected and the expansion valve is controlled in correspondence to the detected refrigerant temperature (see Patent Reference Literature 1). Under this type of temperature-dependent control, the pressure with which the valve is opened is set to increase as the refrigerant temperature detected on the high-pressure side rises. In the other method, an orifice over which the volume of the high-pressure refrigerant is reduced and a relief valve that opens as the pressure on the high-pressure side becomes equal to or higher than a predetermined value are used in combination (see Patent Reference Literature 2).

However, a problem arises in a refrigerant temperature-dependent mechanism such as that disclosed in Patent Reference Literature 1 in that the pressure in the high-pressure line, extending on the side further upstream relative to the expansion valve in the refrigerating cycle, may rise to an excessively high level in high temperature conditions, e.g., when the vehicle is left unused in high temperature conditions, under which the expansion valve does not open readily and often remains in a closed state. Such an excessive increase in the pressure in the high-pressure line, in turn, may lead to damage to the gas cooler or the piping, a refrigerant leak and the like. In addition, the operating efficiency of a refrigerating cycle adopting a structure achieved by combining a fixed orifice and a relief valve as disclosed in Patent Reference Literature 2 tends to be poor since the refrigerant volume is reduced over the orifice to a uniform extent at all times. There are added problems in that a structure that includes a relief valve installed separately, is bound to be more complex and that the manufacturing cost is bound to be high.

In order to address the issues discussed above, the applicant of the present invention proposed in a previous application (see Patent Reference Literature 3) a mechanism that adjusts the valve opening degree, i.e., the extent to which the valve is opened, of the expansion valve by exclusively depending upon a high-pressure side refrigerant pressure measured on the expansion valve intake side or the pressure difference between the pressures measured on the front side and the rear side of the expansion valve (without depending upon the temperature reading). The problems that would occur in the high-pressure line in the temperature-dependent mechanism and the problems including structural complexity that would occur in the mechanism achieved by combining a fixed orifice and a relief valve are addressed with considerable effectiveness in the mechanism disclosed in the previous application.
Patent Reference Literature 1: Japanese Unexamined Patent Publication No. H9-264622
Patent Reference Literature 2: Japanese Unexamined Patent Publication No. 2002-520572
Patent Reference Literature 3: Japanese Unexamined Patent Publication No. 2004-142701

### Disclosure of the Invention

### Problems to be Solved by the Invention

While Patent Reference Literature 3 quoted above discloses that it is desirable to ensure that the pressure and the valve opening degree are in proportion to each other with regard to the control line used for the actual valve opening adjustment for the expansion valve, it does not disclose a more specific and optimal range pertaining to the control line. Through further testing and research, the inventor of the present invention has succeeded in determining the specific characteristics of the optimal control line for achieving a high COP and completing the present invention. Objects of the present invention are to simplify the structure, assure lower manufacturing costs and further improve the operating efficiency.

### Means for Achieving the Objects

The present invention achieves the objects described above by providing a refrigerating cycle that uses carbon dioxide as a refrigerant and includes an adjustment means for increasing a valve opening degree indicating an extent to which an expansion valve is opened as a high-pressure side refrigerant pressure increases and decreases the valve opening degree of the expansion valve as the high-pressure side refrigerant pressure becomes lower by depending upon the high-pressure side refrigerant pressure measured on an intake side of the expansion valve but without depending upon the refrigerant temperature. The refrigerating cycle is characterized in that the adjustment means sets the valve opening degree of the expansion valve to a position equivalent to a piping inner diameter of 0.2 - 0.5 mm when the high-pressure side refrigerant pressure is 7.38 MPa and sets the valve opening degree of the expansion valve to a position equivalent to a piping inner diameter of 0.8 - 1.6 mm when the high-pressure side refrigerant pressure is 14 MPa (claim 1).

By controlling the expansion valve based upon a control line achieving the characteristics described above, the refrigerating cycle can be engaged in operation with a high COP (within -10% of the optimal COP) even when the high-pressure side refrigerant pressure is equal to or higher than 7.38 MPa, i.e., the critical pressure. In addition, since the refrigerant temperature is not a factor in the valve opening degree adjustment, any excessive increase in the pressure at the high-pressure line can be inhibited without having to install a relief valve or the like.

In addition, it is desirable that the adjustment means in the refrigerating cycle according to claim 1 control the expansion valve so as to achieve a valve opening degree within a range equivalent to a piping inner diameter of 0.2 - 0.5 mm when the high-pressure side refrigerant pressure becomes equal to or less than 7.38 MPa (claim 2).

The structure described above also allows the refrigerating cycle to be engaged in operation with a high COP (within a range of -10 ~ 20% relative to the optimal COP) when the high-pressure side refrigerant pressure is equal to and below the critical pressure. In addition, since the expansion valve does not enter a fully closed state, an excessive increase in the pressure at the high-pressure line is inhibited and, at the same time, the occurrence of hunting is prevented.

The present invention also provides a refrigerating cycle that uses carbon dioxide as a refrigerant and includes an adjustment means for increasing a valve opening degree indicating an extent to which an expansion valve is opened as a pressure difference between refrigerant pressures measured on an intake side and on an outlet side of an expansion valve increases and for decreasing the valve opening degree of the expansion valve as the pressure difference decreases by depending upon the pressure difference between the refrigerant pressures measured on opposite sides of the expansion valve but without depending upon the refrigerant temperature. The refrigerating cycle is characterized in that the adjustment means sets the valve opening degree of the expansion valve to a position equivalent to a piping inner diameter of 0.2~ 0.5 mm when the pressure difference is 3.88 MPa and sets the valve opening degree of the expansion valve to a position equivalent to a piping inner diameter of 0.9 - 1.9 mm when the pressure difference is 11.52 MPa (claim 3).

By adjusting the valve opening degree in correspondence to the pressure difference between the refrigerant pressure measured on the intake side and the refrigerant pressure measured on the outlet side of the expansion valve based upon a control line achieving the characteristics described above, the refrigerating cycle can be engaged in operation with a high COP (within -10% of the optimal COP) over the range equal to and above the critical pressure.

It is desirable that the adjustment means in the refrigerating cycle adopting the structure disclosed in claim 3 control the expansion valve so as to achieve a valve opening degree in a range equivalent to a piping inner diameter of 0.2 - 0.5 mm when the pressure difference is equal to or less than 3.88 MPa (claim 4).

The structure described above also allows the refrigerating cycle to be engaged in operation with a high COP (within a range of -10~ 20% relative to the optimal COP) over the high-pressure side refrigerant pressure range is equal to and below the critical pressure, as in the structure according to claim 2.

### Effect of the Invention

By controlling the expansion valve based upon the control line achieving characteristics according to the present invention described above, a high COP can be assured for a refrigerating cycle in which the valve opening degree of the expansion valve is changed by depending upon the high-pressure side refrigerant pressure measured on the expansion valve intake side or the pressure difference between the pressures measured only on the front side and the rear side of the expansion valve.

### Brief Description of the Drawings

FIG. 1 shows a structural example that may be adopted in a refrigerating cycle adopting the present invention;
FIG. 2 shows the structure adopted in the expansion valve in Embodiment 1;
FIG. 3 is a graph indicating the control line range that will be effective for the expansion valve achieved in Embodiment 1;
FIG. 4 is a graph indicating the control line range within -10% of the optimal COP, calculated with regard to the expansion valve in Embodiment 1 by operating an air-conditioning system installed in an extra-large vehicle (vehicle LL) under various load conditions and operating conditions;
FIG. 5 is a graph indicating the control line range within -10% of the optimal COP, calculated with regard to the expansion valve in Embodiment 1 by operating an air-conditioning system installed in an large vehicle (vehicle L) under various load conditions and operating conditions;
FIG. 6 is a graph indicating the control line range within -10% of the optimal COP, calculated with regard to the expansion valve in Embodiment 1 by operating an air-conditioning system installed in an medium-size vehicle (vehicle M) under various load conditions and operating conditions;
FIG. 7 is a graph indicating the control line range within -10% of the optimal COP, calculated with regard to the expansion valve in Embodiment 1 by operating an air-conditioning system installed in an small vehicle (vehicle S) under various load conditions and operating conditions;
FIG. 8 is a graph indicating the relationship between the valve opening degree and the COP change rate over the high-pressure side refrigerant pressure range equal to and below 7.38 MPa, observed with regard to the expansion valve in Embodiment 1 under varying load conditions and operating conditions;
FIG. 9 shows the structure adopted in the expansion valve achieved in a Embodiment 2;
FIG. 10 is a graph indicating the control line range that will be effective for the expansion valve achieved in Embodiment 2;
FIG. 11 is a graph indicating the control line range within -10% of the optimal COP, calculated with regard to the expansion valve in Embodiment 1 by operating an air-conditioning system installed in an extra-large vehicle (vehicle LL) under various load conditions and operating conditions;
FIG. 12 is a graph indicating the control line range within -10% of the optimal COP, calculated with regard to the expansion valve in Embodiment 2 by operating an air-conditioning system installed in an large vehicle (vehicle L) under various load conditions and operating conditions;
FIG. 13 is a graph indicating the control line range within -10% of the optimal COP, calculated with regard to the expansion valve in Embodiment 2 by operating an air-conditioning system installed in an medium-size vehicle (vehicle M) under various load conditions and operating conditions;
FIG. 14 is a graph indicating the control line range within -10% of the optimal COP, calculated with regard to the expansion valve in Embodiment 2 by operating an air-conditioning system installed in an small vehicle (vehicle S) under various load conditions and operating conditions; and
FIG. 15 is a graph indicating the relationship between the valve opening degree and the COP change rate over the pressure difference range equal to and below 3.88 MPa, observed with regard to the expansion valve in Embodiment 2 under varying load conditions and operating conditions.

### Explanation of Reference Numerals

- 1: refrigerating cycle
- 2: compressor
- 3: gas cooler
- 4: internal heat exchanger
- 5, 25: expansion valve
- 6: evaporator
- 10, 26: shell
- 11: bellows
- 12, 27: valve element
- 13, 28: valve seat
- 15, 29: spring
- 16: release hole
- 18, 30: high-pressure side communicating hole
- 19, 31: low-pressure side communicating hole

### Best Mode for Carrying Out the Invention

The following is an explanation of the embodiments of the present invention, given in reference to the attached drawings.

### Embodiment 1

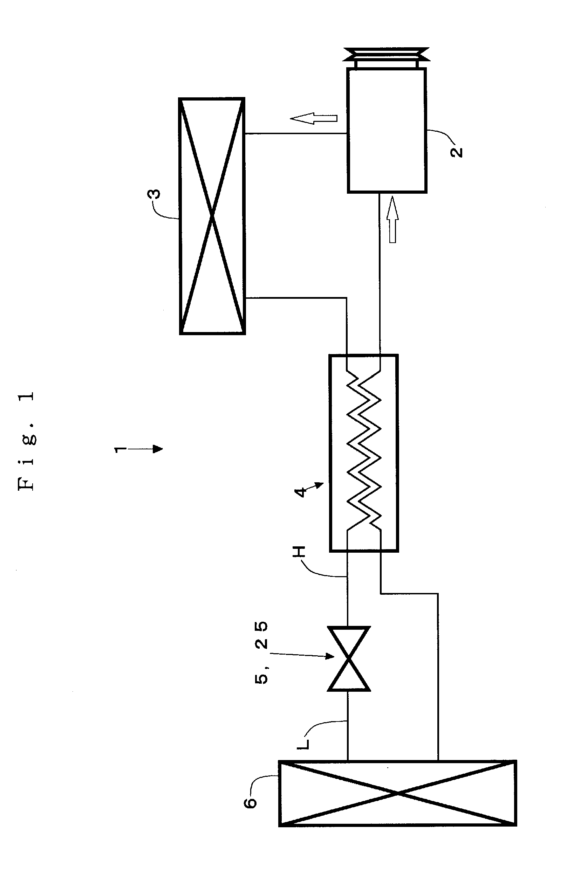

A refrigerating cycle 1 shown in FIG. 1, which is installed in an automotive air-conditioning system, is a super-critical compression-type refrigerating cycle that uses carbon dioxide as a refrigerant. The refrigerating cycle 1 comprises a compressor 2 that compresses the refrigerant, a gas cooler 3 that cools the compressed refrigerant through heat exchange with the outside air, an internal heat exchanger 4 that executes heat exchange for the refrigerant between a high-pressure line H and a low-pressure line L, an expansion valve 5 that reduces the pressure of the refrigerant from the high-pressure line H and guides the refrigerant into the low-pressure line L, and an evaporator 6 that evaporates the depressurized refrigerant through heat exchange with air-conditioning air.

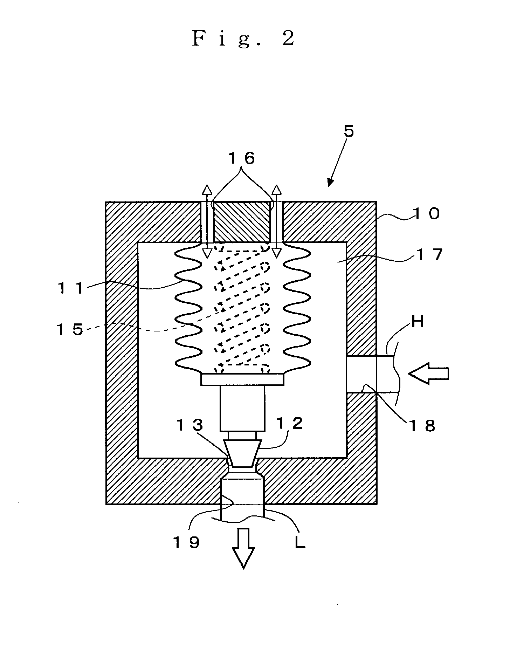

As shown in FIG. 2, the expansion valve 5 in this embodiment includes a shell 10, a bellows 11, a valve element 12, a valve seat 13, a spring 15 and release holes 16. At the shell 10, which includes a hollow portion 17 formed therein, a high-pressure side communicating hole 18 and a low-pressure side communicating hole 19 each communicating between the hollow portion 17 and the outside, are formed. The high-pressure side communicating hole 18 communicates with the high-pressure line H (see FIG. 1) in the refrigerating cycle 1, whereas the low pressures side communicating hole 19 communicates with the low-pressure line L in the refrigerating cycle. The bellows 11, which is an accordion-folded member constituted with a metal foil or the like, is disposed at the hollow portion 17 with one end thereof fixed onto the upper surface of the shell 10 on the inside of the shell 10. The valve element 12 is fixed onto the other end of the bellows 11 and is displaced in the vertical direction (up/down in the figure) as the bellows 11 expands and contracts. The valve seat 13, disposed at the low-pressure side communicating hole 19, assumes a shape that allows the valve element 12 to fit with (becomes seated at) the valve seat. One end of the spring 15 disposed inside the bellows 11 is fixed onto the upper surface of the shell 10 on the inside of the shell 10 with the other end of the spring fixed to the lower end of the bellows 11 (on the side where the upper end of the valve element 12 is present). The spring 15 applies a force that works against contraction of the bellows 11. The release holes 16 formed at the upper surface of the shell 10 communicate between the internal space within the bellows 11 and the outside air. No special gas is charged into the bellows 11 and the internal pressure of the bellows 11 is sustained at a level substantially equal to the atmospheric pressure via the release holes 16 in the embodiment.

The expansion valve 5 adopting the structure described above allows the bellows 11, which remains unaffected by the change in the volume of the internal gas via the release holes 16, to expand and contract simply by depending upon the relationship of the resultant force made up with the resistance force of the bellows 11 and the repulsive force of the spring 15 to the pressure of the refrigerant having flowed into the internal space 17. Thus, the valve opening degree, indicating the degree to which the expansion valve 5 is opened, can be altered in correspondence to the change in the high-pressure side refrigerant pressure alone. There is an added advantage in that tasks such as charging a gas into the bellows 11, maintenance work and the like no longer need to be performed.

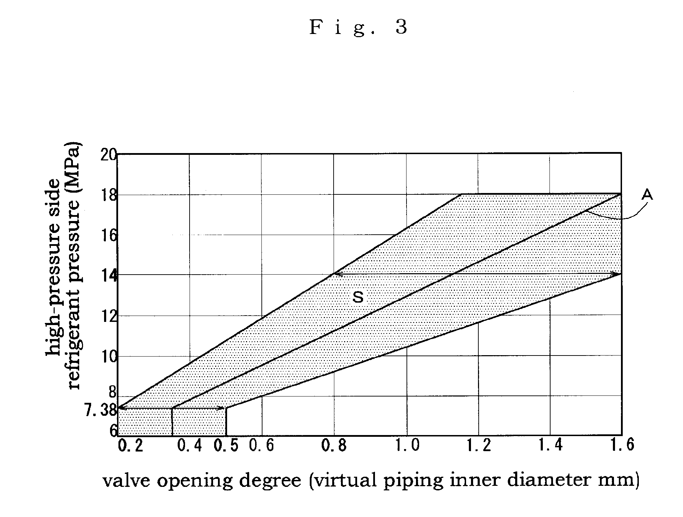

The valve opening degree of the expansion valve 5 is adjusted based upon a single control line A contained within, for instance, a range S shown in FIG. 3 in the embodiment. It is to be noted that the valve opening degree is indicated as the inner diameter of a virtual piping in the figure. Namely, the opening area of a constricting passage formed between the valve element 12 and the valve seat 13 at the expansion valve 5 is the equivalent to the opening area of the virtual piping (when the virtual piping inner diameter is 0.2 mm, for instance, the opening area of the actual constricting passage is approximately 0.1256 mm²). The range S is made up with a group of control lines indicating that the valve opening degree is in a range of 0.2 - 0.5 mm when the high-pressure side refrigerant pressure is 7.38 MPa and the valve opening degree is within a range of 0.8 - 1.6 mm when the high-pressure side refrigerant pressure is 14 MPa over the high-pressure side refrigerant pressure range equal to and above the critical pressure 7.38 MPa and indicating that the valve opening degree is within a range of 0.2 - 0.5 mm over the high-pressure side refrigerant pressure range equal to and below the critical pressure 7.38 MPa. It is to be noted that the upper limit to the high-pressure side refrigerant pressure is set at 18 MPa in this embodiment. A specific control line may be set by selecting a corresponding spring constant for the spring 15.

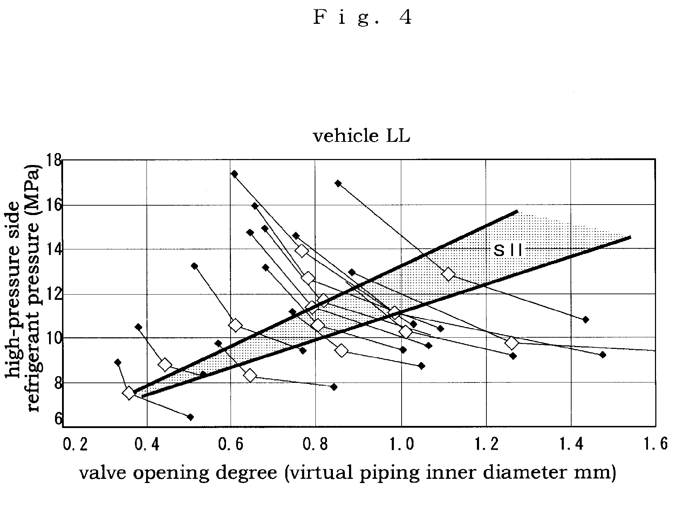

The test data presented in FIGS. 4 through 7 substantiate the effectiveness of the range S. FIG. 4 indicates the control line range Sll within -10% of the optimal COP, calculated with regard to the expansion valve by operating an air-conditioning system installed in an extra-large vehicle (vehicle LL) under various load conditions and operating conditions. The plurality of blank squares in the figure each indicate the optimal COP value determined under a specific set of load conditions and operating conditions, whereas the two filled squares each connected with one of the blank squares indicate a COP range within -10% of the optimal COP value. In the tests, the load conditions were altered by varying the outside temperature within a range of 20 - 45°C, the operating conditions were altered by switching to either outside air supply mode or an inside air circulating mode and also by varying the compressor rotating speed from low to high. Based upon the test data, it was concluded that the control lines that do not deviate from the optimal COP value beyond the -10% range are in the Sll range. In addition, these data were obtained by conducting the tests with the high-pressure side refrigerant pressure set in the range equal to and above the critical pressure 7.38 MPa.

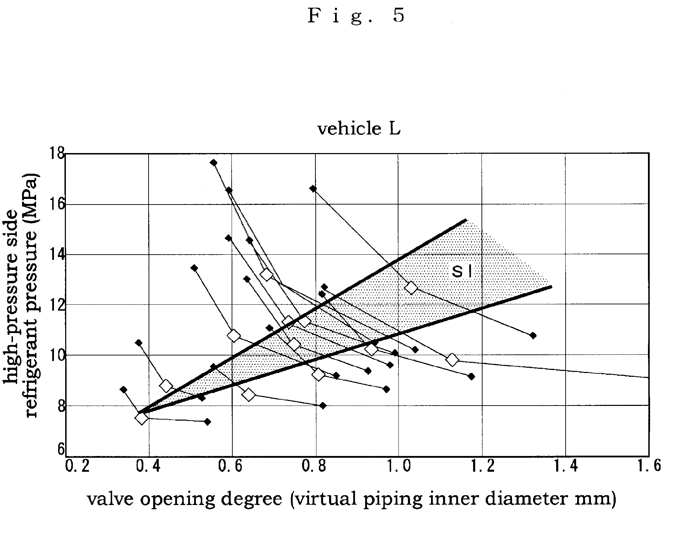

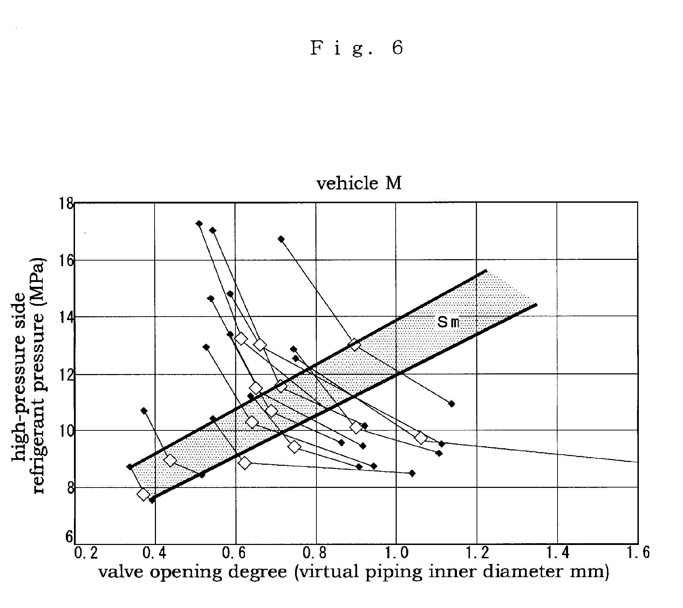

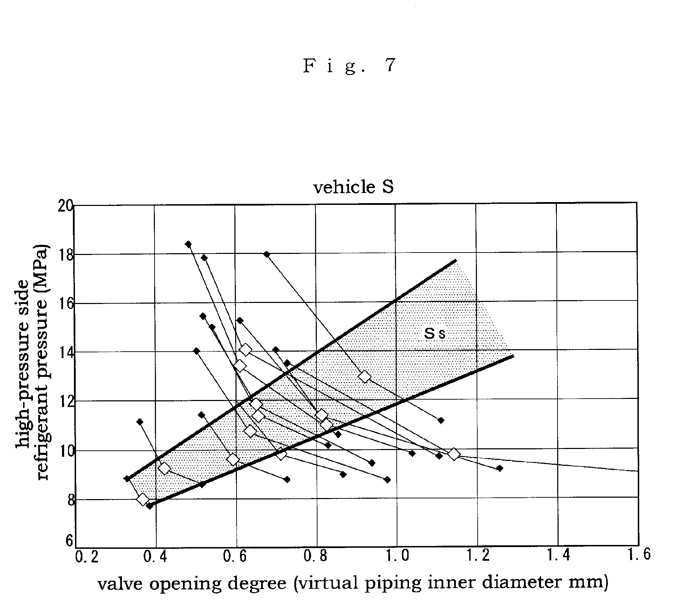

FIG. 5 indicates an expansion valve control line range Sl within -10% of the optimal COP, determined by operating an air-conditioning system installed in a large vehicle (vehicle L) under conditions similar to those described in reference to FIG. 4. In addition, FIG. 6 indicates an expansion valve control line range Sm within -10% of the optimal COP, determined by operating an air-conditioning system installed in a medium-size vehicle (vehicle M) under conditions similar to those described in reference to FIG. 4. FIG. 7 indicates an expansion valve control line range Ss within -10% of the optimal COP, determined by operating an air-conditioning system installed in a small vehicle (vehicle S) under conditions similar to those described in reference to FIG. 4.

The ranges Sll, Sl, Sm and Ss indicated in FIGS. 4 through 7 are all contained in the range S in FIG. 3. Accordingly, by adjusting the valve opening degree of the expansion valve 5 based upon the control lines contained in the range S, a high COP can be assured in vehicles of any size.

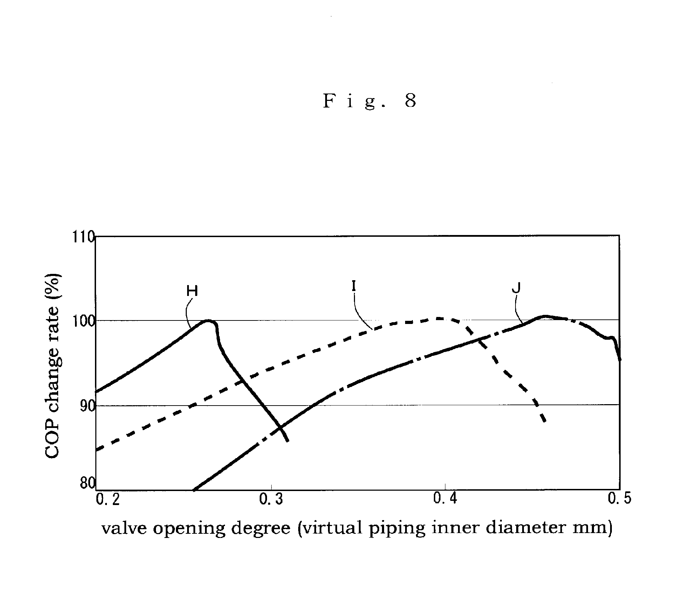

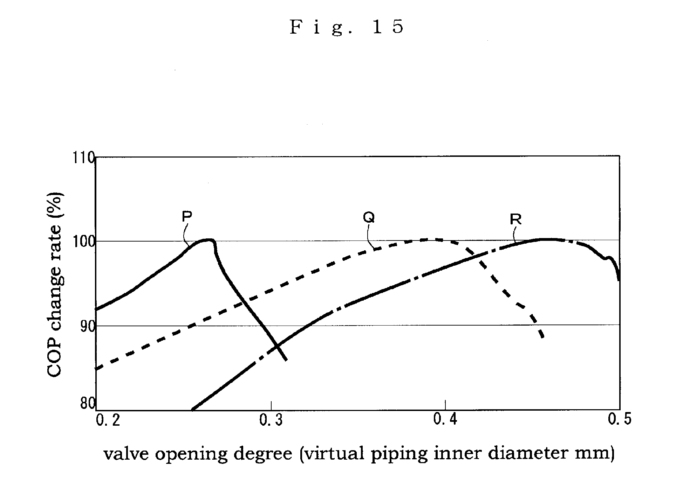

In addition, the expansion valve 5 in the embodiment sustains the valve opening degree within the range of 0.2 - 0.5 mm when the high-pressure side refrigerant pressure is equal to or below the critical pressure 7.38 MPa, via, for instance, a means for stopping the valve element 12 from advancing toward the valve seat 13 at a position with a predetermined distance from the seating position, formed so as to constitute an integrated unit together with the shell 10 and the valve element 12 (see, for instance, FIG. 15 included in Patent Reference Literature 3). FIG. 8 indicates the relationship between the valve opening degree and the COP change rate over the high-pressure side refrigerant pressure range equal to and below the critical pressure 7.38 MPa, observed by varying the load conditions and the operating conditions. In the figure, a line H represents the shift in the relationship that occurred when the outside temperature was 15°C, the air-conditioning system was operated in the outside air supply mode and the compressor was rotating at 800 rpm, a line I represents the shift in the relationship that occurred when the outside temperature was 15°C, the air-conditioning system was operated in the outside air supply mode and the compressor was rotating at 1400 rpm, and a line J represents the shift in the relationship that occurred when the outside temperature was 15°C, the air-conditioning system was operated in the outside air supply mode and the compressor was rotating at 2600 rpm. These data indicate that as long as the valve opening degree is kept within the range of 0.2 - 0.5 mm, a high COP (within a range of -10 ~ 20% relative to the optimal value) can be maintained even when the high-pressure side refrigerant pressure is equal to or below the critical pressure. In addition, since the expansion valve 5 is not allowed to enter the fully closed state, an excessive increase in the pressure at the high-pressure line H is inhibited and, at the same time, the occurrence of hunting at the expansion valve 5 is prevented.

It is to be noted that while the expansion valve 5 achieved in the embodiment adopts a mechanical structure as shown in FIG. 2, the present invention is not limited to this example and it may be adopted in conjunction with an expansion valve constituted with an electromagnetic valve, a pressure sensor, an ECU that is engaged in operation in conformance to a predetermined program or the like.

### Embodiment 2

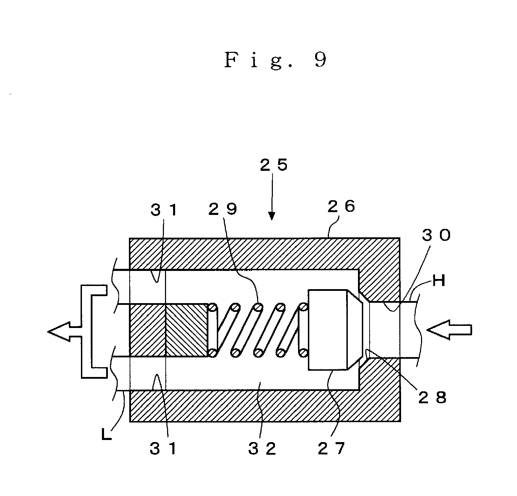

The refrigerating cycle 1 in Embodiment 2 includes an expansion valve 25 shown in FIG. 9 in place of the expansion valve 5 used in Embodiment 1. The expansion valve 25 in this embodiment includes a shell 26, a valve element 27, a valve seat 28 and a spring 29. At the shell 26, which includes a hollow portion 32 formed therein, a high-pressure side communicating hole 30 and a low-pressure side communicating hole 31 each communicating between the hollow portion 32 and the outside, are formed. The high-pressure side communicating hole 30 communicates with the high-pressure line H, whereas the low pressures side communicating hole 31 communicates with the low-pressure line L. The valve element 27, fixed to one end of the spring 29 is displaced as it is subjected to both the pressure at the high-pressure line H and the pressure at the low-pressure line L. The valve seat 28 disposed at the high-pressure side communicating hole 30 assumes a shape that allows the valve element 27 to fit with (become seated at) the valve seat. The other end of the spring 29 is fixed to the inner wall surface of the shell 26 and a force is applied from the spring 29 to the valve element 27 fixed at the one end thereof along the seating direction.

The valve element 27 at the expansion valve 25 adopting the structure described above is displaced by the resultant force made up of the high-pressure side refrigerant pressure, the low-pressure side refrigerant pressure and the repulsive force imparted from the spring 29. As a result, the valve opening degree of the expansion valve 25 can be adjusted simply in correspondence to the change in the pressure difference between the high-pressure side refrigerant pressure and the low-pressure side refrigerant pressure.

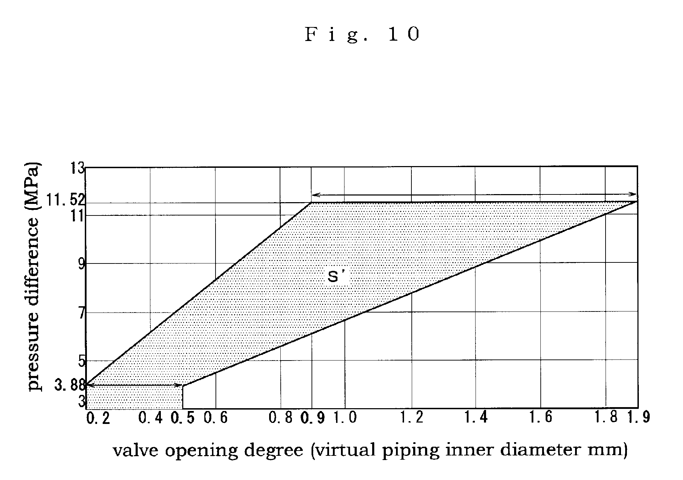

The expansion valve 25 is adjusted based upon a single control line contained within, a range S' shown in FIG. 10. It is to be noted that the valve opening degree is indicated as the inner diameter of a virtual piping in the figure. Namely, the opening area of a constricting passage formed between the valve element 27 and the valve seat 28 at the expansion valve 25 is the equivalent to the opening area of the virtual piping. The range S' is made up with a group of control lines indicating that the valve opening degree is in the range of 0.2 - 0.5 mm when the pressure difference is 3.88 MPa and that the valve opening degree is within a range of 0.9 - 1.9 mm when the pressure difference is 11.52 MPa over a pressure difference range equal to and above 3.88 MPa and indicating that the valve opening degree is within the range of 0.2 ~ 0.5 mm over the pressure difference range equal to and below 3.88 MPa. A specific control line may be set by selecting a corresponding spring constant for the spring 29.

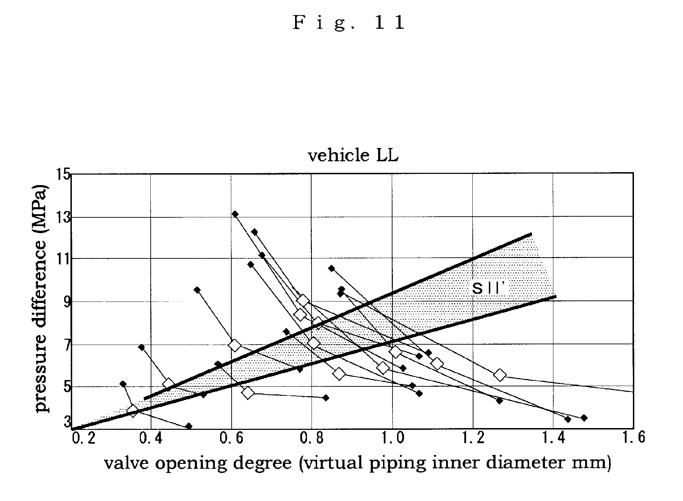

The test data presented in FIGS. 11 through 15 substantiate the effectiveness of the range S'. FIG. 11 indicates the control line range Sll' within -10% of the optimal COP, calculated with regard to the expansion valve by operating an air-conditioning system installed in an extra-large vehicle (vehicle LL) under various load conditions and operating conditions. The plurality of blank squares in the figure each indicate the optimal COP value determined under a specific set of load conditions and operating conditions, whereas the two filled squares each connected with one of the blank squares indicate a COP range within -10% of the optimal COP value. In the tests, the load conditions were altered by varying the outside temperature within a range of 20 - 45°C, the operating conditions were altered by switching to either outside air supply mode or inside air circulating mode and also by varying the compressor rotating speed from low to high. Based upon the test data, it was concluded that the control lines that do not deviate from the optimal COP value beyond the -10% range are in the Sll' range. In addition, these data were obtained in tests conducted in the pressure difference range equal to and above 3.88 MPa.

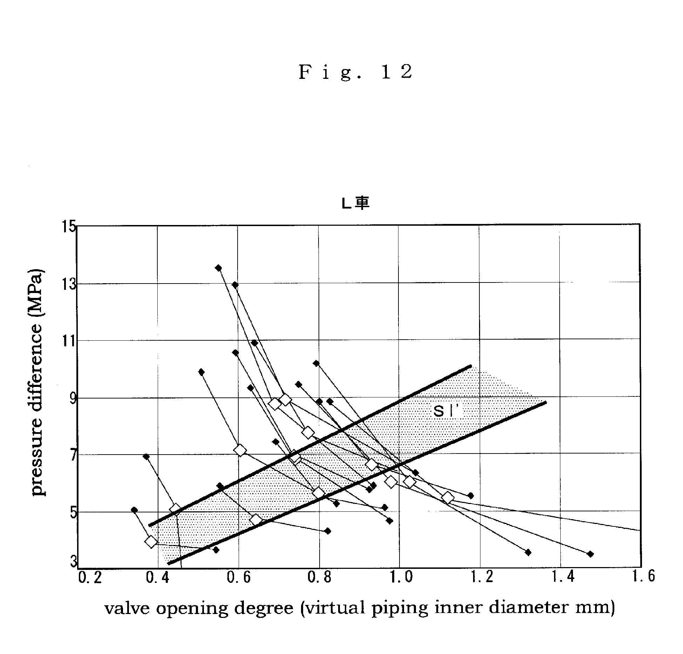

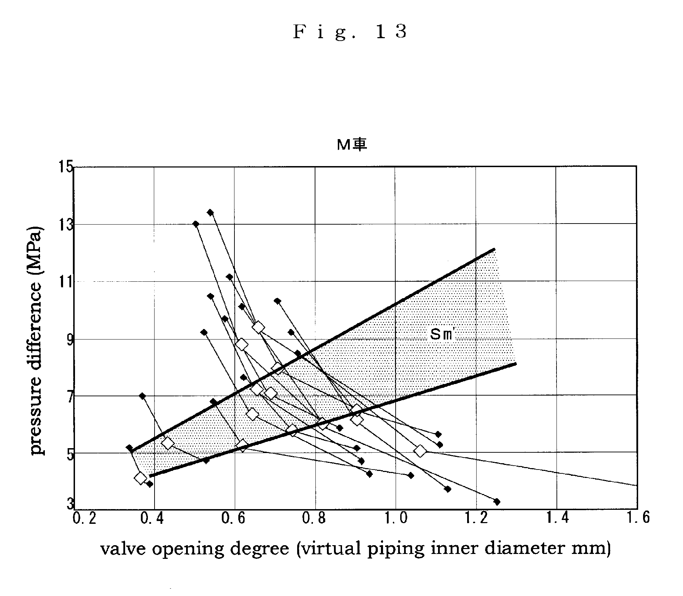

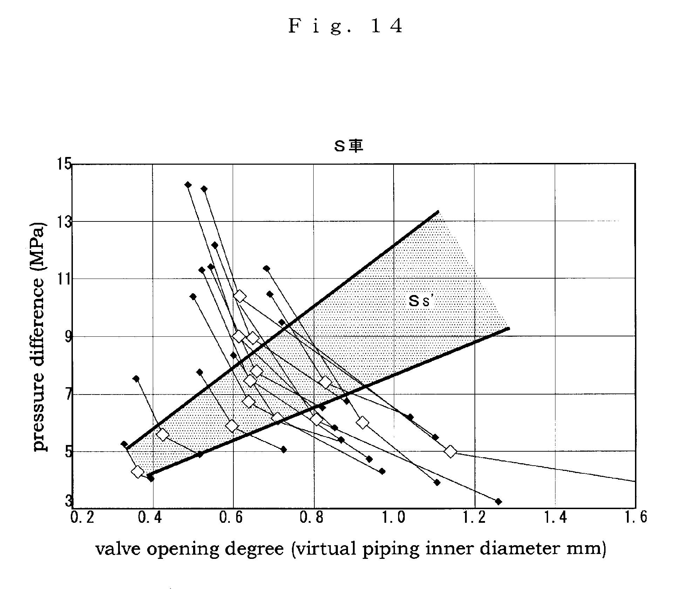

FIG. 12 indicates an expansion valve control line range Sl' within -10% of the optimal COP, determined by operating an air-conditioning system installed in a large vehicle (vehicle L) under conditions similar to those described in reference to FIG. 11. In addition, FIG. 13 indicates an expansion valve control line range Sm' within -10% of the optimal COP, determined by operating an air-conditioning system installed in a medium-size vehicle (vehicle M) under conditions similar to those described in reference to FIG. 11. FIG. 14 indicates an expansion valve control line range Ss' within -10% of the optimal COP, determined by operating an air-conditioning system installed in a small vehicle (vehicle S) under conditions similar to those described in reference to FIG. 11.

The ranges Sll', Sl', Sm' and Ss' indicated in FIGS. 11 through 15 are all contained in the range S' in FIG. 10. Accordingly, by adjusting the valve opening degree of the expansion valve 25 based upon the control lines contained in the range S', a high COP can be assured in vehicles of any size.

In addition, the expansion valve 25 in the embodiment sustains the valve opening degree within the range of 0.2 - 0.5 mm when the pressure difference range is equal to and below 3.88 MPa. FIG. 15 indicates the relationship between the valve opening degree and the COP change rate over the pressure difference range equal to and below 3.88 MPa, observed by varying the load conditions and the operating conditions. In the figure, a line P represents the shift in the relationship that occurred when the outside temperature was 15°C, the air-conditioning system was operated in the outside air supply mode and the compressor was rotating at 800 rpm, a line Q represents the shift in the relationship that occurred when the outside temperature was 15°C, the air-conditioning system was operated in the outside air supply mode and the compressor was rotating at 1400 rpm, and a line R represents the shift in the relationship that occurred when the outside temperature was 15°C, the air-conditioning system was operated in the outside air supply mode and the compressor was rotating at 2600 rpm. These data indicate that as long as the valve opening degree is kept within the range of 0.2 - 0.5 mm, a high COP (within a range of -10~ 20% relative to the optimal value) can be maintained even when the pressure difference is equal to or less than 3.88 MPa. In addition, since the expansion valve 5 is not allowed to enter the fully closed state, an excessive increase in the pressure at the high-pressure line H is inhibited and, at the same time, the occurrence of hunting at the expansion valve 5 is prevented.

It is to be noted that while the expansion valve 25 achieved in the embodiment adopts a mechanical structure as shown in FIG. 9, the present invention is not limited to this example and it may be adopted in conjunction with an expansion valve constituted with an electromagnetic valve, a pressure sensor, an ECU that is engaged in operation in conformance to a predetermined program or the like.

### Industrial Applicability

As explained above, the present invention provides a refrigerating cycle adopting a simpler structure, which assures lower manufacturing costs and a high COP in any size vehicle.

## Claims

1. A refrigerating cycle (1) that uses carbon dioxide as a refrigerant and includes an adjustment means for increasing a valve opening degree indicating an extent to which an expansion valve (5) is opened as a high-pressure side refrigerant pressure measured on an intake side of said expansion valve (5) increases and for decreasing the valve opening degree of said expansion valve (5) as the high-pressure side refrigerant pressure becomes lower, **characterized in:**
**that** said adjustment means sets the valve opening degree of said expansion valve (5) to a position equivalent to a piping inner diameter of 0.2~ 0.5 mm when the high-pressure side refrigerant pressure is 7.38 MPa; and
**that** said adjustment means sets the valve opening degree of said expansion valve (5) to a position equivalent to a piping inner diameter of 0.8 - 1.6 mm when the high-pressure side refrigerant pressure is 14 MPa.

2. A refrigerating cycle according to claim 1, **characterized in:**
**that** said adjustment means controls said expansion valve (5) so as to achieve a valve opening degree within a range equivalent to a piping inner diameter of 0.2 - 0.5 mm when the high-pressure side refrigerant pressure is equal to or less than 7.38 MPa.

3. A refrigerating cycle (1) that uses carbon dioxide as a refrigerant and includes an adjustment means for increasing a valve opening degree indicating an extent to which an expansion valve (25) is opened as a pressure difference between refrigerant pressures measured on an intake side and on an outlet side of said expansion valve (25) increases and for decreasing said valve opening degree of said expansion valve (25) as the pressure difference decreases, **characterized in:**
**that** said adjustment means sets the valve opening degree of said expansion valve (25) to a position equivalent to a piping inner diameter of 0.2 ~ 0.5 mm when the high pressure difference is 3.88 MPa; and
**that** said adjustment means sets the valve opening degree of said expansion valve (25) to a position equivalent to a piping inner diameter of 0.9~1.9 mm when the pressure difference is 11.52 MPa.

4. A refrigerating cycle according to claim 3 **characterized in:**
**that** said expansion valve (25) is controlled so as to achieve a valve opening degree in a range equivalent to a piping inner diameter of 0.2 - 0.5 mm when the pressure difference is equal to or less than 3.88 MPa.
